# EUROPÄISCHE PATENTSCHRIFT

(11) **EP 3 786 737 B1**
(45) Veröffentlichungstag und Bekanntmachung des Hinweises auf die Patenterteilung: **30.11.2022**
(21) Anmeldenummer: 20190254.1
(22) Anmeldetag: 10.08.2020
(51) Int. Cl.: G05B 19/4099, G05B 19/401, B23Q 17/24, A61C 13/00

(54) **VERFAHREN ZUR AUTOMATISIERTEN EINRICHTUNG EINES ROHLINGS IN EINER BEARBEITUNGSMASCHINE**
METHOD FOR AUTOMATED PROVISION OF A BLANK IN A PROCESSING MACHINE
PROCÉDÉ D'AGENCEMENT AUTOMATISÉ D'UNE ÉBAUCHE DANS UNE MACHINE D'USINAGE

(30) Priorität: 20.08.2019 DE 102019005849
(43) Veröffentlichungstag der Anmeldung: 03.03.2021
(73) Patentinhaber: VHF Camfacture AG, 72119 Ammerbuch (DE)
(72) Erfinder: Benzinger, Frank, 72119 Ammerbuch (DE)
(74) Vertreter: Wasmuth, Rolf

(56) Entgegenhaltungen:
- DE-U1- 20 316 004
- US-A1- 2006 032 348
- US-A1- 2007 048 689

## Beschreibung

Die Erfindung betrifft ein Verfahren zur automatisierten Einrichtung eines Rohlings in einer Dentalfräsmaschine und ein Verfahren zur Bearbeitung eines Rohlings in einer Dentalfräsmaschine.

Zur Herstellung von Zahnersatz, z. B. Kronen, Brücken oder dergleichen, werden in Bearbeitungsmaschinen, insbesondere Dentalfräsmaschinen, Rohlinge aus verschiedenen Materialien spanend bearbeitet. Der Fertigungsprozess setzt sich dabei aus mehreren Bearbeitungsvorgängen zusammen, z. B. Fräsen, Schleifen, Polieren. Zur Bearbeitung eines Rohlings wird dieser in die Werkstückhalterung eingelegt und anschließend eingerichtet. Beim sogenannten Einrichten muss die Position und die Ausrichtung des Rohlings in der Bearbeitungsmaschine ermittelt werden. Die in der Bearbeitungsmaschine gespeicherten virtuellen Koordinaten des Rohlings werden den realen Ist-Koordinaten angepasst. Anschließend kann die Fertigung des Werkstückes erfolgen.

Verfügt der Rohling nach einer Bearbeitung noch über ausreichend viel Material, können weitere Werkstücke aus dem nur teilweise bearbeiteten Rohling gefertigt werden. Hierzu werden bei bekannten Dentalfräsmaschinen die an Rohlingen durchgeführten Fräsbearbeitungen in Form eines Datensatzes, beispielsweise durch ein NC-Programm, gespeichert, wodurch über eine CAM-Software Rückschlüsse auf die Geometrie des bereits bearbeiteten Rohlings gezogen werden. Ausgehend von den gespeicherten Daten programmiert der Bediener einen neuen Bearbeitungsvorgang auf einen noch unbearbeiteten Bereich des Rohlings. Damit der Bearbeitungsvorgang auch in dem vom Bediener ausgewählten Bereich des Rohlings erfolgt, ist eine exakte Einrichtung des Rohlings in der Bearbeitungsmaschine notwendig.

Die im Dentalbereich eingesetzten Rohlinge sind häufig als rotationssymmetrische Ronden ausgebildet. Um also die absolute Lage des Rohlings zu ermitteln, sind diese mit einem speziellen Kennzeichen versehen. Solche Kennzeichen können beispielsweise ein RFID-Chip, aber auch geometrische Besonderheiten wie eine Nut oder ein Absatz am Rohling sein. Zur Erkennung dieser Kennzeichen werden beispielsweise Taster oder optische Sensoren eingesetzt. Eine andere Möglichkeit, die Lage der Rohlinge zu bestimmen, ist mit der ersten Bearbeitung eines Rohlings eine Kerbe in den Rohling zu fräsen. Bei der erneuten Verwendung des Rohlings ist der Rohling durch den Bediener an seiner Kerbe gegenüber der Bearbeitungsmaschine auszurichten. Eine weitere Möglichkeit besteht darin, den Rohling in einen sogenannten Spannrahmen zu spannen, der wiederum selbst beim Einspannen gegenüber der Bearbeitungsmaschine ausgerichtet ist. Der Rohling muss jedoch dann über seine Lebenszeit in dem Spannrahmen gespannt bleiben, da er andernfalls seine Ausrichtung gegenüber dem Spannrahmen und damit auch gegenüber der Bearbeitungsmaschine verlieren würde. In beiden Fällen ist jedoch die vollständige Historie der CAM-Datensätze notwendig, da bereits beim Programmieren ein auf dem Rohling unbearbeiteter Bearbeitungsbereich festgelegt werden muss.

Nachteilig an derartigen Bearbeitungsmaschinen ist, dass bei einem weiteren Bearbeitungsvorgang an einem Rohling immer ein gespeicherter Datensatz herangezogen werden muss und der reale Rohling selbst über entsprechende Kennzeichnungen verfügen muss, die ein Einrichten des Rohlings ermöglichen. Folglich ist für jeden nur teilweise bearbeiteten Rohling ein Datensatz zu hinterlegen, was eine äußerst aufwändige Verwaltung der Datensätze zur Folge hat. Der derzeitige Trend zur erhöhten Material- und Farbvielfalt für Zahnersatz intensiviert das Problem des Verwaltungsaufwandes für derartige Rohlinge. Werden die Rohlinge in entsprechende Spannrahmen gespannt, ist dies mit entsprechenden Anschaffungskosten für eine Vielzahl solcher Spannrahmen verbunden. Kommen verschiedene Systeme zum Einsatz, ist es zumeist nicht möglich, Datensätze von einem auf das andere CAM-System zu übertragen. Dies kann die Auslastung der entsprechenden Systeme beeinträchtigen.

Aus der US 2006/0032348 A1 ist ein Verfahren bekannt, in welchem im Schiffbau anfallende Restbleche verwertet werden. Die Restbleche werden in einem Aufnahmebereich einer Kameraeinrichtung positioniert und die Kontur der Restbleche mittels der Kameraeinrichtung erfasst. Über ein in der Steuerung hinterlegtes Programm wird ein Schnittbild für die zu fertigenden Werkstücke auf dem Restblech vorgesehen.

Aus der US 2007/0048689 A1 ist ein Verfahren offenbart, das zur Anordnung von zu fräsenden Konturen auf einem Rohling bzw. einem bereits bearbeiteten Rohling dient.

Die Rohlinge werden in einer entsprechenden Datenbank verwaltet. Auf Basis von Rohlingdatensätzen wird ein noch nicht bearbeiteter Bereich des Rohlings identifiziert, in dem dann das vorgesehene Werkstück ausgefräst wird.

Aus der DE 203 16 004 U1 ist ein Rohling mit einer Kerbe offenbart, wobei die Kerbe an der Umfangsseite des Rohlings vorgesehen ist und zum Einrichten des Rohlings dient.

Der Erfindung liegt die Aufgabe zugrunde, ein Verfahren zur automatisierten Einrichtung eines Rohlings in einer Dentalfräsmaschine zu schaffen, welches einen verwaltungsarmen Produktionsprozess ermöglicht.

Die Aufgabe hinsichtlich des Verfahrens zur automatisierten Einrichtung und Bearbeitung eines Rohlings in einer Dentalfräsmaschine wird mit einem Verfahren nach den Merkmalen des Anspruchs 1 und mit einem Verfahren nach den Merkmalen des Anspruchs 12 gelöst.

Die für das Verfahren zur automatisierten Einrichtung eines Rohlings vorgesehene Bearbeitungsmaschine umfasst eine Rechnereinheit zur Erstellung von Bearbeitungsprogrammen zur Fertigung von Werkstücken, eine Werkstückhalterung und eine Bilderfassungseinheit zur optischen Erfassung von Bilddaten eines in der Werkstückhalterung aufgenommenen Rohlings. Die Bearbeitungsmaschine ist eine Dentalfräsmaschine. Das Verfahren umfasst die folgenden Schritte in der angegebenen Reihenfolge:
- Ein Rohling wird in der Bearbeitungsmaschine, insbesondere in der Werkstückhalterung fixiert.
- Anschließend wird ein Bild des Rohlings mittels der Bilderfassungseinheit erstellt.
- Der Rohling wird in einen bereits bearbeiteten Bereich und einen unbearbeiteten Bereich anhand der erfassten Bilddaten mittels der Rechnereinheit unterteilt.
- Eine herzustellende Werkstückgeometrie wird dem unbearbeiteten Bereich des Rohlings zugeordnet.
- Abschließend wird die Fräsbearbeitung durchgeführt.

Bei der automatisierten, optischen Einrichtung wird der Rohling über die Bilderfassungseinheit in der Werkzeugaufnahme analysiert. Die Bearbeitungsmaschine erkennt die genaue Position und Ausrichtung des Rohlings. Der noch unbearbeitete Bereich des Rohlings wird erkannt und diesem das zu fertigende Werkstück zugeordnet. Daten über den, insbesondere teilweise bearbeiteten Rohling, beispielsweise auf der Rechnereinheit hinterlegt, sind nicht mehr notwendig. So kann der Verlust der Historie der CAM-Datensätze oder eine Umstellung auf ein anderes CAM-System kompensiert werden. Es kann sogar vollständig auf die Speicherung von Datensätzen verzichtet werden und dadurch deren aufwändige Verwaltung reduziert werden. Ferner ist die Kennzeichnung der Rohlinge durch entsprechende Markierungen, wie Kerben oder das Einspannen in Spannrahmen, zum Einrichten des Rohlings nicht mehr notwendig.

Es ist vorteilhaft vorgesehen, dass die Bilderfassungseinrichtung im Gehäuse der Bearbeitungsmaschine angeordnet ist. Dadurch wird eine kompakte Bauweise der Bearbeitungsmaschine ermöglicht. Die Bilderfassungseinrichtung umfasst vorzugsweise mindestens eine Kamera. Die Kamera ist bevorzugt oberhalb der Werkstückhalterung angeordnet. Dabei ist das Objektiv der Kamera in Richtung der Werkstückhalterung gerichtet. Es ist vorteilhaft vorgesehen, dass die Kamera eine Längsachse aufweist, und dass die Kamera derart ausgerichtet ist, dass die Längsachse der Kamera koaxial zur Werkstückhalterung ausgerichtet ist. Dadurch kann ein verzerrungsfreies Bild des Rohlings erstellt werden. Ausgehend von diesen Bilddaten wird eine zweidimensionale Kontur des Rohlings in Draufsicht, also in Richtung von der Kamera zum Rohling hin, erstellt.

Es ist vorteilhaft vorgesehen, dass die Unterteilung des Rohlings mittels eines Softwarealgorithmus auf Basis des Kontrastes zwischen dem bearbeiteten Bereich und dem unbearbeiteten Bereich berechnet wird. Unterhalb der Werkstückhalterung ist vorzugsweise eine Lichtquelle zur Erhöhung des Kontrastes vorgesehen. Bei der Erstellung eines Zahnersatzes wird das Material aus dem Rohling über dessen gesamte Höhe entnommen, wodurch Ausnehmungen am Rohling entstehen. Die Lichtquelle scheint durch die Ausnehmungen des Rohlings hindurch, so dass die Ausnehmungen deutlicher von dem noch vorhandenen Material des Rohlings unterschieden werden können. Durch die Erhöhung des Kontrastes kann der Softwarealgorithmus auf zuverlässige Weise die Konturen zwischen bearbeiteten und unbearbeiteten Bereichen berechnen.

Die Zuordnung der herzustellenden Werkstückgeometrie dem unbearbeiteten Bereich des Rohlings erfolgt vorzugsweise automatisiert durch die Steuereinrichtung. In einer alternativen erfindungsgemäßen Ausführung der Bearbeitungsmaschine erfolgt die Zuordnung der herzustellenden Werkstückgeometrie dem unbearbeiteten Bereich des Rohlings durch die Rechnereinheit mittels eines CAM-Systems. Dabei werden die durch den Softwarealgorithmus bearbeiteten Bilddaten an das CAM-System übermittelt. Somit liegt dem CAM-System die Kontur des in der Werkzeugaufnahme eingespannten Rohlings vor. Auf Basis dieser Kontur kann die zu bearbeitende Werkstückgeometrie in den unbearbeiteten Bereich des Rohlings positioniert werden. Anschließend gibt das CAM-System ein NC-Programm aus, das der Steuereinrichtung übermittelt wird.

Die Bearbeitungsmaschine umfasst vorzugsweise einen Werkstückwechsler. Es ist vorteilhaft vorgesehen, dass die Bearbeitungsmaschine nach fehlgeschlagener Zuordnung der Werkstückgeometrie auf einen weiteren, im Werkstückwechsler vorrätigen Rohling, insbesondere desselben Materials, zugreift. Sollte der unbearbeitete Bereich des Rohlings zu gering sein, um das Werkstück aus dem Restrohling zu fertigen, wird ein neuer Rohling aus dem Werkstückwechsler ausgewählt. Dieser Vorgang wird so lange wiederholt, bis das zu bearbeitende Werkstück einem Rohling erfolgreich zugewiesen werden kann.

Ein ebenfalls erfindungsgemäßes Verfahren zur Bearbeitung eines Rohlings umfasst die folgenden Schritte:
- Erstellen eines Bildes des Rohlings mittels einer von der Bearbeitungsmaschine separat ausgebildeten Bilderfassungseinheit, wobei die Bilderfassungseinheit zur optischen Erfassung von Bilddaten eines Rohlings dient,
- Unterteilen des Rohlings in einen bereits bearbeiteten Bereich und in einen unbearbeiteten Bereich anhand der erfassten Bilddaten,
- Zuordnen einer herzustellenden Werkstückgeometrie dem unbearbeiteten Bereich des Rohlings,
- Einlegen des Rohlings in die Bearbeitungsmaschine, insbesondere in die Werkstückhalterung der Bearbeitungsmaschine und
- Durchführen der Fräsbearbeitung in dem unbearbeiteten Bereich des Rohlings.

Die für dieses Verfahren vorgesehene Bearbeitungsmaschine zur Bearbeitung eines Rohlings, wobei die Bearbeitungsmaschine eine Dentalfräsmaschine ist, umfasst ein Gehäuse und eine Spindeleinheit mit einem Elektromotor. Die Steuerung und die elektrische Versorgung der Bearbeitungsmaschine erfolgt über eine Steuereinrichtung. Die Bearbeitungsmaschine umfasst eine Werkstückhalterung und eine Rechnereinheit zur Erstellung von Bearbeitungsprogrammen zur Fertigung von Werkstücken.

Über eine von der Bearbeitungsmaschine separat ausgebildete Bilderfassungseinheit, also eine externe Bilderfassungseinheit, erfolgt eine Bildaufnahme des Rohlings. Die erzeugten Bilddaten werden an die Bearbeitungsmaschine weitergeleitet. In einem Vergleich der Bilddaten und des zu erstellenden Werkstücks kann erkannt werden, ob der unbearbeitete Bereich des Rohlings ausreichend groß ist, um das Werkstück mit dem Rohling zu fertigen. Dem unbearbeiteten Bereich des Rohlings wird das Werkstück zugeordnet. Nachdem der Rohling in die Bearbeitungsmaschine eingelegt ist, kann die Fräsbearbeitung beginnen. Da auf Basis der aufgenommenen Bilddaten unbearbeitete Bereiche festgestellt werden, müssen keine Fertigungsdaten, wie CAM-Datensätze gespeichert werden. Eine Zuweisung unbearbeiteter Bereiche des Rohlings kann folglich auch ohne derartige CAM-Datensätze mittels der Verarbeitung der durch die Bilderfassungseinheit gewonnenen Bilddaten erfolgen.

Es kann vorteilhaft sein, Bilddaten des Rohlings mittels der externen Bilderfassungseinheit bereits in der Werkstückhalterung gehalten zu erstellen. Hierzu kann eine Bildaufnahme von außerhalb der Bearbeitungsmaschine durch die Bilderfassungseinheit erfolgen. Alternativ weist die Bilderfassungseinheit eine ausreichend kleine Baugröße auf, um in der Bearbeitungsmaschine, also innerhalb des Gehäuses, eine entsprechende Bildaufnahme zu ermöglichen. In diesem Fall erfolgt zuerst das Einlegen des Rohlings in die Bearbeitungsmaschine und anschließend das Erstellen eines Bildes des Rohlings.

Die Bilderfassungseinheit ist vorzugsweise eine tragbare Rechnereinheit mit einer Kamera. Eine derartige Rechnereinheit kann ein Laptop, ein Tabletcomputer oder ein Mobiltelefon sein. Auch andere Geräte, beispielsweise optische 3D-Scanner oder dgl., können als Bilderfassungseinheit zweckmäßig sein. So können insbesondere mit dem Mobiltelefon aufgrund der kompakten Baugröße Bildaufnahmen innerhalb der Bearbeitungsmaschine gemacht werden, wodurch der Rohling bereits in der Bearbeitungsmaschine eingelegt sein kann.

Vorzugsweise wird der Rohling beim Einlegen in die Werkstückhalterung an einer am Rohling vorgesehenen Markierung ausgerichtet. Dadurch wird der Rohling in einer vorbestimmten Position angeordnet, die zu einer Überdeckung des Koordinatensystems des Rohlings mit dem der Bearbeitungsmaschine führt. Vorzugsweise umfasst auch die Werkstückhalterung eine Markierung, an der der Rohling ausgerichtet werden kann. Die Ausrichtung der Markierungen des Rohlings und der Werkstückhalterung kann mechanisch erfolgen. Dies ist insbesondere dann notwendig, wenn die Bildaufnahme des Rohlings vor Einlegen des Rohlings in die Bearbeitungsmaschine erfolgt. Dadurch kann eine genaue Einrichtung des Werkstücks in der Werkzeughalterung erfolgen. Erfolgt eine Bildaufnahme des Rohlings eingelegt in der Werkstückhalterung, kann die Lage des Rohlings in der Werkstückhalterung auch aus den Bilddaten berechnet werden. Hierzu kann die relative Lage des Rohlings gegenüber der Werkstückhalterung anhand der jeweiligen Markierung rechnerisch erfolgen. Alternativ kann die Lage von Rohling und Werkstückhalterung zueinander an markanten Geometrieabschnitten, beispielsweise durch in den Rohling gefräste Strukturen, bestimmt werden.

Es ist vorteilhaft vorgesehen, dass die von der Bilderfassungseinheit erfassten Bilddaten über eine Datenverbindung an die Rechnereinheit der Bearbeitungsmaschine übertragen werden. Die Datenverbindung kann insbesondere über eine Kabelverbindung, vorzugsweise über eine kabellose Verbindung wie Bluetooth oder Ähnlichem erfolgen.

Weitere Merkmale der Erfindung ergeben sich aus den weiteren Ansprüchen, der Beschreibung und der Zeichnung, in der nachfolgend ein im Einzelnen beschriebenes Ausführungsbeispiel der Erfindung dargestellt ist. Es zeigen:
- Fig. 1: in schematischer Ansicht eine Dentalfräsmaschine,
- Fig. 2: in schematischer Seitenansicht einen Rohling zwischen einer Bilderfassungseinheit und einer Lichtquelle,
- Fig. 3: eine Draufsicht auf den Rohling gemäß Fig. 2 in Richtung des Pfeils III,
- Fig. 4: ein Flussdiagramm des Verfahrens,
- Fig. 5: in schematischer Ansicht eine Dentalfräsmaschine mit externer Bilderfassungseinheit und
- Fig. 6: ein Flussdiagramm des Verfahrens mit externer Bilderfassungseinheit.

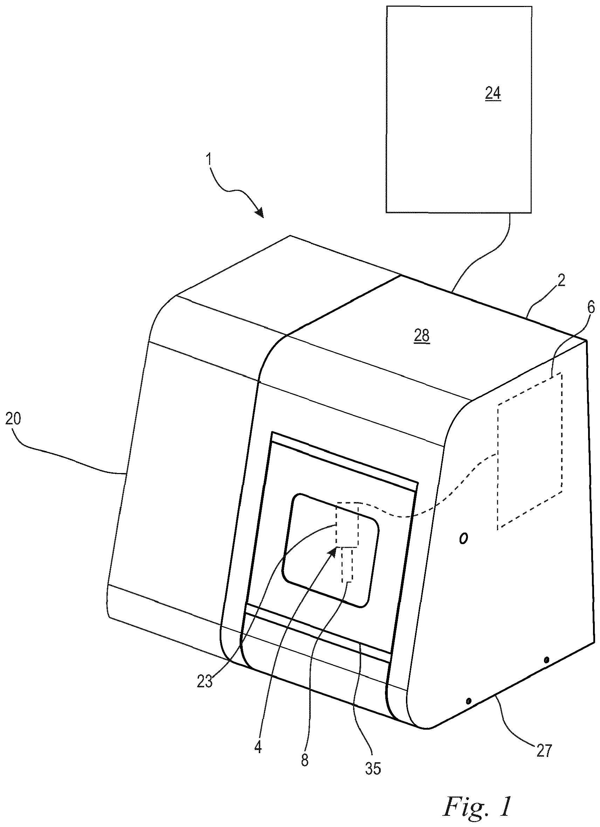

In Fig. 1 ist perspektivisch eine Bearbeitungsmaschine 1 dargestellt, die einer Dentalfräsmaschine entspricht. Die Bearbeitungsmaschine 1 ist zur Herstellung eines Zahnersatzes, insbesondere zum Fertigen von Kronen und Brücken vorgesehen. Die Bearbeitungsmaschine 1 weist ein Gehäuse 2 mit einer Ladeklappe 35 auf. Das Gehäuse 2 begrenzt einen Innenraum der Bearbeitungsmaschine 1. Nach Öffnen der Ladeklappe 35 ist der Zugang zu dem Innenraum der Bearbeitungsmaschine 1 offen, um beispielsweise einen Rohling 11 einzulegen oder herauszunehmen. Das Gehäuse 2 der Bearbeitungsmaschine 1 weist eine Oberseite 28 und eine Unterseite 27 auf, auf welcher die Bearbeitungsmaschine 1 abgestellt ist. Demnach geben die Begriffe "oben" eine von der Unterseite 27 zur Oberseite 28 der Bearbeitungsmaschine 1 verlaufende Richtung und "unten" die entgegengesetzte Richtung an. In der Bearbeitungsmaschine 1 ist eine Spindeleinheit 4 angeordnet, wobei die Spindeleinheit 4 im bevorzugten Ausführungsbeispiel über ein nicht näher dargestelltes Antriebssystem im Raum translatorisch wie auch rotatorisch verstellbar ist. In einem alternativen Ausführungsbeispiel kann das Antriebssystem auch so aufgebaut sein, dass die Spindeleinheit 4 lediglich translatorisch oder rotatorisch verstellbar ist. Die Bearbeitungsmaschine 1 umfasst eine in Fig. 1 schematisch dargestellte Steuereinrichtung 6. Die in Fig. 1 gezeigte Spindeleinheit 4 umfasst eine Spindel 8 und einen Elektromotor 23. Der Elektromotor 23 ist über einen elektrischen Anschluss der Spindeleinheit 4 mit der Steuereinrichtung 6 verbunden. Die Steuereinrichtung 6 dient zur elektrischen Versorgung und Steuerung der Spindeleinheit 4 sowie dem Antriebssystem.

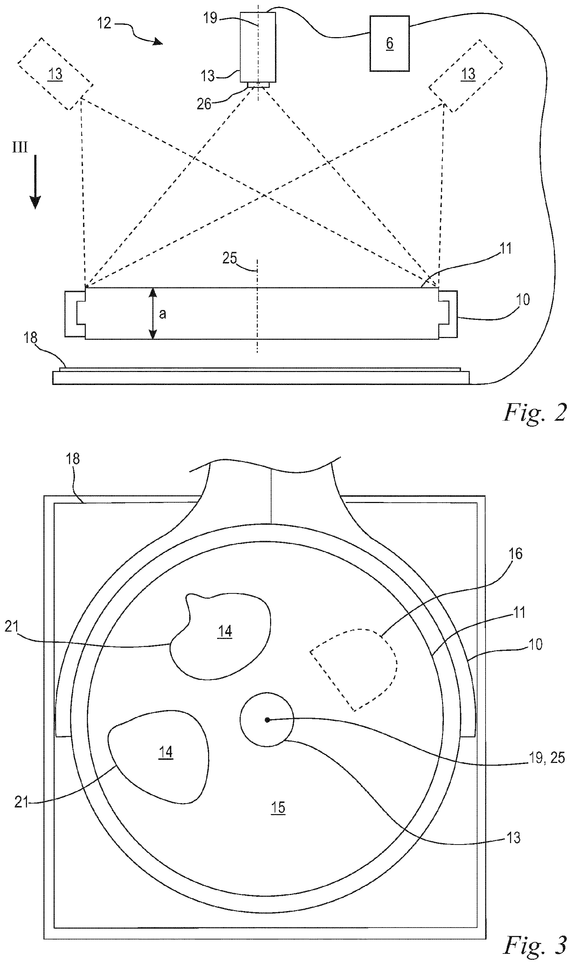

Die Bearbeitungsmaschine 1 umfasst eine Werkstückhalterung 10 die in Fig. 2 in einer schematischen Seitendarstellung gezeigt ist. In der Werkstückhalterung 10 ist ein Rohling 11 eingespannt. Wie in Fig. 2 gezeigt, umfasst die Bearbeitungsmaschine 1 eine Bilderfassungseinrichtung 12 mit mindestens einer Kamera 13. Es kann auch zweckmäßig sein, mehrere Kameras 13 vorzusehen. Die Kamera 13 ist innerhalb des Gehäuses 2 der Bearbeitungsmaschine 1 und oberhalb der Werkstückhalterung 10 angeordnet. Die Kamera 13 umfasst ein Objektiv 26 das in Richtung der Werkstückhalterung 10 zur Aufnahme eines Bildes ausgerichtet ist. Die Kamera 13 weist eine Längsachse 19 auf. Die Kamera 13 ist in dem bevorzugten Ausführungsbeispiel der Bearbeitungsmaschine 1 derart ausgerichtet, dass die Längsachse 19 der Kamera 13 im Wesentlichen koaxial zu einer Längsachse 25 der Werkstückhalterung 10 ausgerichtet ist. In anderen Worten ist die Kamera 13 mittig zur Werkstückhalterung 10 angeordnet. Ist ein Rohling 11 in die Werkstückhalterung 10 eingespannt, verläuft die Längsachse 25 der Werkstückhalterung 10 durch die Mitte des Rohlings 11.

In einer alternativen Ausführung der Bearbeitungsmaschine 1 kann es auch zweckmäßig sein, die Kamera 13 außermittig zur Werkstückhalterung 10 anzuordnen. Wie in Fig. 2 schematisch angedeutet, ist es in einem solchen Fall zweckmäßig, die Kamera 13 geschwenkt zur Werkstückhalterung 10 anzuordnen, um den Aufnahmebereich der Kamera 13 so auszurichten, dass ein in die Werkstückhalterung 10 gespannter Rohling 11 von dem Aufnahmebereich umfasst ist. Somit kann eine vollständige Bildaufnahme des Rohlings 11 gewährleistet werden. Durch die zum Werkstückhalter 10 geschwenkte Ausrichtung der Kamera 13 ist die Bildaufnahme des Rohlings 11 verzerrt, so dass die geometrischen Verhältnisse des Rohlings 11 nicht mehr den realen Maßen des Rohlings 11 entsprechen. Zum Ausgleich des Schwenkwinkels der Kamera 13 wird ein Softwarealgorithmus verwendet, der die Bilddaten überarbeitet und die geometrischen Verhältnisse nachkorrigiert.

Wird ein Rohling 11 in die Werkstückhalterung 10 eingespannt, stehen der Bearbeitungsmaschine 1 noch nicht ausreichend Informationen zur Verfügung, um die absolute Lage des Rohlings 11 bestimmen zu können. Der Rohling 11 ist grundsätzlich als Ronde ausgebildet. Die Höhe a des Rohlings 11 kann dabei variieren. Aufgrund der runden Geometrie des Rohlings 11 ist eine absolute Bestimmung der Lage des Rohlings 11 in unbearbeitetem Zustand nicht notwendig. Da der Rohling 11 keine Ausnehmungen 21 aufweist, die bei Bearbeitung eines Werkstückes 16 zu berücksichtigen sind, kann die Bearbeitung an beliebiger Stelle des Rohlings 11 beginnen. Ist der Rohling 11 hingegen bereits bearbeitet, weist dieser Ausnehmungen 21 auf, die sich über die gesamte Höhe a des Rohlings 11 erstrecken. Um sicherzustellen, dass bei der Fertigung eines Werkstückes 16 sich die spanende Bearbeitung nicht versehentlich in die Ausnehmungen 21 des Rohlings 11 erstreckt und somit die Bearbeitung abgebrochen werden muss, ist zuvor die absolute Lage des Rohlings 11 zu bestimmen.

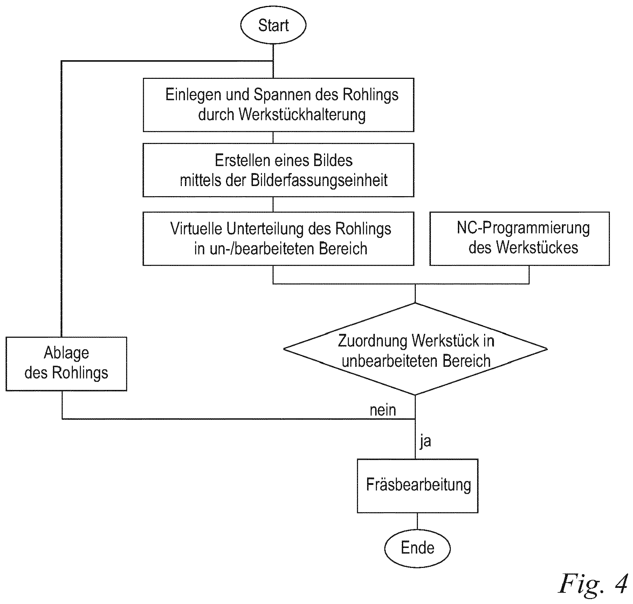

Wie in Fig. 4 in Form eines Flussdiagrammes dargestellt, wird hierzu der Rohling 11 in die Werkstückhalterung 10 eingelegt und in dieser gespannt gehalten. Mittels der Bilderfassungseinheit 12, insbesondere der Kamera 13, erfolgt eine Bildaufnahme des Rohlings 11. Die erfassten Bilddaten werden an die Steuereinrichtung 6 weitergeleitet. Durch eine bildverarbeitende Software wird auf Basis der Bilddaten erkannt, in welchem Bereich des Rohlings bereits eine Bearbeitung stattgefunden hat und welcher Bereich noch unbearbeitet ist. Die bildverarbeitende Software arbeitet mittels eines Softwarealgorithmus, der auf Basis des Kontrastes die verschiedenen Bereiche des Rohlings 11 erkennt. Um einen erhöhten Kontrast zwischen den verschiedenen Bereichen zu erzeugen, ist in einer bevorzugten Ausführung der Bearbeitungsmaschine 1 gemäß Fig. 2 eine Lichtquelle 18 unterhalb der Werkstückhalterung 10 angeordnet. Bei Aktivierung der Lichtquelle 18 wird der Rohling 11 von unten angestrahlt. Das Licht wird durch den Rohling 11 blockiert, lediglich an den Ausnehmungen 21 scheint das Licht durch bis zur Kamera 13, wodurch der Kontrast zwischen den Bereichen erhöht wird. Der Rohling 11 wird durch die bildverarbeitende Software in einen unbearbeiteten Bereich 15 und in einen bearbeiteten Bereich 14 unterteilt. Im bearbeiteten Bereich 15 ist eine weitere Bearbeitung eines Werkstückes 16 nicht mehr möglich. Im unbearbeiteten Bereich 14 können hingegen weitere Werkstücke 16 erstellt werden.

In der bevorzugten Ausführung der Bearbeitungsmaschine 1 ist die bildverarbeitende Software mit der Rechnereinheit 24 gekoppelt. Die bearbeiteten Bilddaten werden an ein CAM-System auf der Rechnereinheit 24, welches zur NC-Programmierung der Werkstücke 16 dient, weitergeleitet. Alternativ kann die bildverarbeitende Software auch direkt in dem CAM-System integriert sein. Auf Basis der bearbeiteten Bilddaten erkennt das CAM-System, in welchem Bereich des Rohlings eine Bearbeitung des Werkstückes 16 erfolgen kann. Das CAM-System positioniert virtuell die zu erstellende Werkstückgeometrie in dem unbearbeiteten Bereich 15 des Rohlings 11. Dabei findet ein Abgleich statt, ob der unbearbeitete Bereich 15 ausreichend groß ist, um das Werkstück 16 zu fertigen. Ist die Anforderung erfüllt, wird das entsprechende NC-Programm ausgegeben, und die Fertigung des Werkstückes 16 wird begonnen. Sollte der unbearbeitete Bereich 15 nicht ausreichend groß sein, wird der Vorgang abgebrochen. Ein neuer Rohling 11 ist einzulegen. Der Prozess beginnt von vorne. Bevorzugt erfolgt der Prozess automatisch.

In einer alternativen Ausführung der Bearbeitungsmaschine 1 ist die bildverarbeitende Software lediglich mit der Steuereinrichtung 6 gekoppelt und übermittelt dieser entsprechende Angaben über den eingespannten Rohling 11. Das CAM-System gibt lediglich das NC-Programm zur Fertigung des Werkstückes 16 aus und übermittelt dieses an die Steuereinrichtung 6. In einer separaten Routine auf der Steuereinrichtung 6 erfolgt ein Abgleich, ob der unbearbeitete Bereich 15 des Rohlings 11 ausreichend groß zur Fertigung des Werkstückes 16 ist.

Wie in Fig. 1 gezeigt, umfasst das bevorzugte Ausführungsbeispiel der Bearbeitungsmaschine 1 einen Werkstückwechsler 20, in welchem mehrere Rohlinge 11 lagerbar sind. Zur Bearbeitung eines Rohlings 11 greift die Werkstückhalterung 10 auf den Werkzeugwechsler 20 zu und entnimmt einen Rohling 11. Ist die Bearbeitung abgeschlossen, wird der Rohling 11 wieder automatisch in den Werkstückwechsler 20 zurückgelegt. Wurde kein ausreichend großer unbearbeiteter Bereich auf dem Rohling identifiziert, wird der Benutzer informiert, beispielsweise über einen mit der Rechnereinheit 24 oder der Steuereinrichtung 6 gekoppelten, nicht dargestellten Bildschirm. Folglich muss ein neuer Rohling 11 eingelegt werden. Dies kann von Hand erfolgen, im bevorzugten Ausführungsbeispiel jedoch führt die Werkstückhalterung 10 den Rohling 11 automatisch in den Werkstückwechsler 20 zurück, legt ihn dort ab und greift einen neuen Rohling 11 zur Bearbeitung heraus. Der Vorgang beginnt dann von vorne.

Die Bearbeitungsmaschine 1 kann in einer alternativen Ausführung auch ohne Werkstückwechsler 20 ausgebildet sein, wodurch ein manuelles Einlegen bzw. Herausnehmen des Rohlings 11 erforderlich ist.

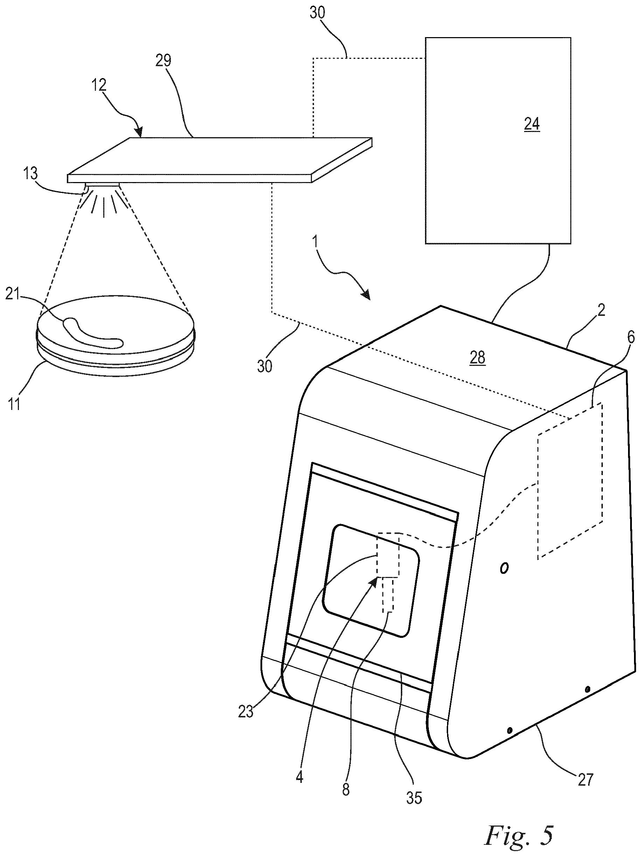

In Fig. 5 ist eine schematische Darstellung einer Bearbeitungsmaschine 1 und einer externen Bilderfassungseinheit 12 für eine alternative Ausführung des erfindungsgemäßen Verfahrens gezeigt. Gleiche Bezugszeichen in den Figuren 1 und 5 bezeichnen die gleichen Bauelemente. Die Bearbeitungsmaschine 1 nach Fig. 5 unterscheidet sich gegenüber der nach Fig. 1 darin, dass diese keinen Werkzeugwechsler 20 und keine Bilderfassungseinheit 12 aufweist. Es kann zweckmäßig sein, auch für die Ausführung der Bearbeitungsmaschine 1 nach Fig. 5 einen Werkzeugwechsler 20 vorzusehen. Die Bilderfassungseinheit 12 ist als eine externe Bilderfassungseinheit 12 ausgebildet. Demnach ist die Bilderfassungseinheit 12 separat von der Bearbeitungsmaschine 1 ausgebildet. Die Bilderfassungseinheit 12 ist im Ausführungsbeispiel als tragbare Rechnereinheit 29 mit einer Kamera 13 ausgebildet. Die tragbare Rechnereinheit 29 mit Kamera 13 kann insbesondere ein Laptop, ein Tablet oder ein Mobiltelefon sein. Es kann in einer alternativen Ausführung der Bilderfassungseinheit 12 zweckmäßig sein, einen stationären, von der Bearbeitungsmaschine separaten Rechner vorzusehen, der eine Kamera 13 aufweist. Die Kamera 13 kann tragbar ausgebildet sein, wodurch auch Bildaufnahmen von dem Rohling 11 in der Werkstückhalterung 10 erfolgen können. Alternativ kann die Kamera 13 auch stationär an dem Rechner vorgesehen sein, wonach der Rohling 11 zur Aufnahme eines Bildes unter die Kamera 13 gelegt werden muss und anschließend in die Bearbeitungsmaschine 1 eingelegt wird. Es kann auch zweckmäßig sein, eine von der Bearbeitungsmaschine externe Bilderfassungseinheit 12 vorzusehen, die als optischer Scanner, insbesondere als optischer 3D-Scanner ausgebildet ist.

Wie in Fig. 5 schematisch angedeutet, ist die Bilderfassungseinheit 12 über eine Datenverbindung 30 mit der Rechnereinheit 24 und/oder mit der Steuereinrichtung 6 verbunden. Dadurch kann eine Übertragung der vom Rohling 11 aufgenommenen Bilddaten von der Bilderfassungseinheit 12 zur Rechnereinheit 24 und/oder zur Steuereinrichtung 6 erfolgen. Die Datenverbindung 30 kann über ein Datenkabel erfolgen. Es kann zweckmäßig sein, die Datenverbindung 30 kabellos, beispielsweise via Bluetooth zu bilden.

In einer alternativen Ausführung des erfindungsgemäßen Verfahrens erfolgen die Schritte gemäß dem in Fig. 4 gezeigtem Flussdiagramm mit dem Unterschied, dass die Bilderfassungseinheit 12 eine von der Bearbeitungsmaschine 1 separate Bilderfassungseinheit gemäß Fig. 5 ist.

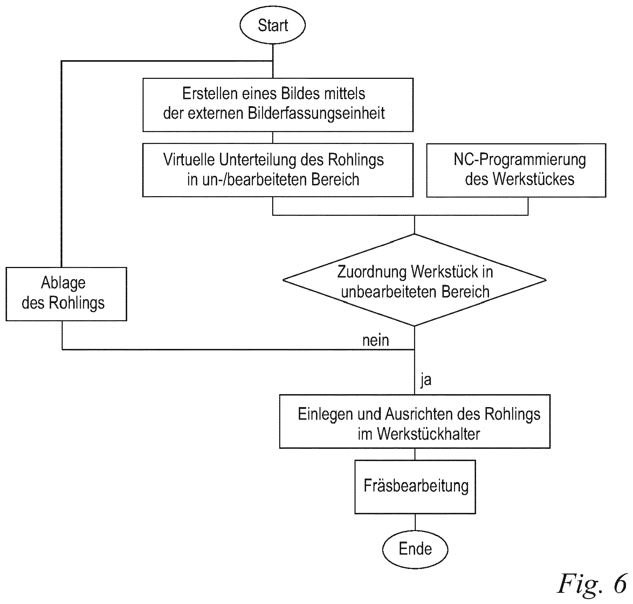

In Fig. 6 ist ein Flussdiagramm eines weiteren, alternativen, erfindungsgemäßen Verfahrens gezeigt. Von dem Rohling 11 wird mittels der externen Bilderfassungseinheit 12 ein Bild erstellt. Die Bilddaten werden an die Steuereinrichtung 6 und/oder die Rechnereinheit 24 weitergeleitet. Vorzugsweise wird das erstellte Bild in das CAM-System auf der Rechnereinheit 24, welches zur NC-Programmierung der Werkstücke 16 dient, weitergeleitet. Hierfür können die Bilddaten entweder von der Bilderfassungseinheit 12 unmittelbar an die Rechnereinheit 24 oder über die Steuereinrichtung 6 an die Rechnereinheit 24 übersandt werden. Das vom Rohling 11 erzeugte Bild wird deckungsgleich über den im CAM-System erstellten Rohling 11 gelegt. Der im CAM-System erstellte Rohling 11 ist koaxial zu dem Rohling 11 der Bilddatei angeordnet. Über einen bildbearbeitenden Softwarealgorithmus, der die Bilddatei analysiert, erfolgt eine Einteilung des Rohlings 11 im CAM-System auf Basis der Bilddatei in einen bearbeiteten Bereich 14 und einen unbearbeiteten Bereich 15. Anschließend wird das zu fertigende Werkstück 16 dem unbearbeiteten Bereich des Rohlings 11 zugewiesen. Diese Schritte erfolgen vorzugsweise automatisiert über einen entsprechenden Softwarealgorithmus. Alternativ kann der Bediener das zu fertigende Werkstück von Hand in den unbearbeiteten Bereich des Rohlings im CAM-System positionieren. So kann der Bediener beispielsweise das Ergebnis des Softwarealgorithmus korrigieren. Der unbearbeitete Bereich kann nur auf Basis der Bilddatei erkannt werden.

Anschließend ist der Rohling 11 in die Bearbeitungsmaschine 1 einzulegen. Alternativ kann der Rohling auch unmittelbar nach der Erstellung der Bilddatei in die Bearbeitungsmaschine 1 eingelegt werden. Damit das Koordinatensystem des Rohlings 11, das sogenannte Werkstückkoordinatensystem, mit dem Koordinatensystem der Bearbeitungsmaschine 1 übereinstimmt, ist der Rohling 11 mittels einer Markierung gegenüber der Werkstückhalterung 10 auszurichten. Als Markierung können beispielsweise Kerben, Absätze oder Farbmarkierungen am Rohling 11 vorgesehen sein. Vorzugsweise weist auch die Werkstückhalterung 10 entsprechende Markierungen auf. So kann der Rohling 11 über seine Markierung an der Markierung der Werkstückhalterung 10 ausgerichtet werden. Ist der Rohling 11 in der Werkstückhalterung 10 positioniert, erfolgt die Fräsbearbeitung im unbearbeiteten Bereich 15 des Rohlings 11.

In einer alternativen Ausgestaltung der Bilderfassungseinheit 12 können in der Bilderfassungseinheit 12 weitere Informationen durch den Benutzer hinterlegt werden. So kann beispielsweise der Rohlingtypus, insbesondere die Maße des Rohlings sowie das entsprechende Material des Rohlings, angegeben werden. Diese Informationen werden mit der erstellten Bilddatei an die Rechnereinheit 24 übertragen. Anschließend wird im CAM-System automatisiert auf Basis der angegebenen Zusatzinformationen ein Rohling erstellt und die Bilddatei über den Rohling gelegt. Danach erfolgt die Zuordnung des unbearbeiteten Bereichs 15 und des bearbeiteten Bereichs 14 sowie die Positionierung des zu fertigenden Werkstückes 16 in dem unbearbeiteten Bereich 15. Die weiteren Verfahrensschritte erfolgen wie oben ausgeführt.

## Patentansprüche

1. Verfahren zur automatisierten Einrichtung eines Rohlings in einer Bearbeitungsmaschine, wobei die Bearbeitungsmaschine (1) eine Dentalfräsmaschine ist,
wobei die Bearbeitungsmaschine (1) ein Gehäuse (2) und eine Spindeleinheit (4) mit einem Elektromotor (23) umfasst,
wobei die Steuerung und die elektrische Versorgung der Bearbeitungsmaschine (1) über eine Steuereinrichtung (6) erfolgt, mit einer Rechnereinheit (24) zur Erstellung von Bearbeitungsprogrammen zur Fertigung von Werkstücken, einer Werkstückhalterung (10) und einer Bilderfassungseinheit (12) zur optischen Erfassung von Bilddaten eines in der Werkstückhalterung (10) aufgenommenen Rohlings (11),
umfassend die folgenden Schritte:
- Fixieren eines Rohlings (11) in der Bearbeitungsmaschine (1), insbesondere in der Werkstückhalterung (10),
- Erstellen eines Bildes des Rohlings (11) mittels der Bilderfassungseinheit (12),
- Unterteilen des Rohlings (11) in einen bereits bearbeiteten Bereich (14) und in einen unbearbeiteten Bereich (15) anhand der erfassten Bilddaten,
- Zuordnen einer herzustellenden Werkstückgeometrie (17) dem unbearbeiteten Bereich (15) des Rohlings (11) und
- Durchführen der Fräsbearbeitung.

2. Verfahren nach Anspruch 1,
**dadurch gekennzeichnet, dass** die Bilderfassungseinrichtung (12) im Gehäuse (2) der Bearbeitungsmaschine (1) angeordnet ist.

3. Verfahren mach Anspruch 1 oder 2,
**dadurch gekennzeichnet, dass** die Bilderfassungseinrichtung (12) mindestens eine Kamera (13) umfasst.

4. Verfahren nach Anspruch 3,
**dadurch gekennzeichnet, dass** die Kamera (13) oberhalb der Werkstückhalterung (10) angeordnet ist.

5. Verfahren nach Anspruch 3 oder 4,
**dadurch gekennzeichnet, dass** die Kamera (13) eine Längsachse (19) aufweist, und dass die Kamera (13) derart ausgerichtet ist, dass die Längsachse (19) der Kamera (13) koaxial zur Werkstückhalterung (10) ausgerichtet ist.

6. Verfahren nach einem der Ansprüche 1 bis 5,
**dadurch gekennzeichnet, dass** die Unterteilung des Rohlings (11) mittels eines Softwarealgorithmus auf Basis des Kontrastes zwischen dem bearbeiteten Bereich (14) und dem unbearbeiteten Bereich (15) berechnet wird.

7. Verfahren nach Anspruch 6,
**dadurch gekennzeichnet, dass** unterhalb der Werkstückhalterung (10) eine Lichtquelle (18) zur Erhöhung des Kontrastes vorgesehen ist.

8. Verfahren nach einem der Ansprüche 1 bis 7,
**dadurch gekennzeichnet, dass** die Zuordnung der herzustellenden Werkstückgeometrie (17) dem unbearbeiteten Bereich (15) des Rohlings (11) automatisiert durch die Steuereinrichtung (6) erfolgt.

9. Verfahren nach einem der Ansprüche 1 bis 7,
**dadurch gekennzeichnet, dass** die Zuordnung der herzustellenden Werkstückgeometrie (17) dem unbearbeiteten Bereich (15) des Rohlings (11) automatisiert durch die Rechnereinheit (24) mittels eines CAM-Systems erfolgt.

10. Verfahren nach einem der Ansprüche 1 bis 9,
**dadurch gekennzeichnet, dass** die Bearbeitungsmaschine (1) einen Werkstückwechsler (20) umfasst.

11. Verfahren nach Anspruch 10,
**dadurch gekennzeichnet, dass** nach fehlgeschlagener Zuordnung der Werkstückgeometrie (17) die Bearbeitungsmaschine (1) auf einen weiteren im Werkstückwechsler (20) vorrätigen Rohling (11) zugreift.

12. Verfahren zur Bearbeitung eines Rohlings,
wobei eine Bearbeitungsmaschine (1) zur Bearbeitung des Rohlings ein Gehäuse (2) und eine Spindeleinheit (4) mit einem Elektromotor (23) umfasst, wobei die Bearbeitungsmaschine (1) eine Dentalfräsmaschine ist, wobei die Steuerung und die elektrische Versorgung der Bearbeitungsmaschine (1) über eine Steuereinrichtung (6) erfolgt, wobei die Bearbeitungsmaschine eine Werkstückhalterung (10) und eine Rechnereinheit (24) zur Erstellung von Bearbeitungsprogrammen zur Fertigung von Werkstücken umfasst,
umfassend die folgenden Schritte:
- Erstellen eines Bildes des Rohlings (11) mittels einer von der Bearbeitungsmaschine separat ausgebildeten Bilderfassungseinheit (12), wobei die Bilderfassungseinheit (12) zur optischen Erfassung von Bilddaten eines Rohlings (11) dient,
- Unterteilen des Rohlings (11) in einen bereits bearbeiteten Bereich (14) und in einen unbearbeiteten Bereich (15) anhand der erfassten Bilddaten,
- Zuordnen einer herzustellenden Werkstückgeometrie (17) dem unbearbeiteten Bereich (15) des Rohlings (11),
- Einlegen des Rohlings (11) in die Bearbeitungsmaschine (1), insbesondere in die Werkstückhalterung (10) der Bearbeitungsmaschine (1), und
- Durchführen der Fräsbearbeitung in dem unbearbeiteten Bereich des Rohlings.

13. Verfahren nach Anspruch 12,
**dadurch gekennzeichnet, dass** der Rohling (11) beim Einlegen in den Werkstückhalter (10) an einer am Rohling vorgesehenen Markierung ausgerichtet wird.

14. Verfahren nach Anspruch 12 oder 13,
**dadurch gekennzeichnet, dass** die Bilderfassungseinheit (12) eine tragbare Rechnereinheit mit einer Kamera, insbesondere ein Mobiltelefon, vorzugsweise ein Tabletcomputer, ist.

15. Verfahren nach Anspruch 12,
**dadurch gekennzeichnet, dass** die von der Bilderfassungseinheit (12) erfassten Bilddaten über eine Datenverbindung (30) an die Rechnereinheit (24) der Bearbeitungsmaschine (1) übertragen werden.

## Claims

1. Automated preparation method for a blank in a processing machine, the processing machine (1) being a dental milling machine,
the processing machine (1) comprising a housing (2) and a spindle unit (4) with an electric motor (23),
control and electrical supply of the processing machine (1) being implemented by way of a control device (6), comprising a computer unit (24) for creating processing programs for the manufacture of workpieces, a workpiece holder (10) and an image capturing unit (12) for optical capture of image data of a blank (11) accommodated in the workpiece holder (10),
comprising the following steps:
- fastening a blank (11) in the processing machine (1), in particular in the workpiece holder (10),
- creating an image of the blank (11) by means of the image capturing unit (12),
- dividing the blank (11) into an already processed region (14) and into an unprocessed region (15) on the basis of the captured image data,
- assigning a workpiece geometry (17) to be produced to the unprocessed region (15) of the blank (11) and
- carrying out the milling processing.

2. Method according to Claim 1, **characterized in that** the image capturing device (12) is arranged in the housing (2) of the processing machine (1).

3. Method according to Claim 1 or 2, **characterized in that** the image capturing device (12) comprises at least one camera (13),

4. Method according to Claim 3, **characterized in that** the camera (13) is arranged above the workpiece holder (10).

5. Method according to Claim 3 or 4, **characterized in that** the camera (13) has a longitudinal axis (19), and **in that** the camera (13) is oriented in such a way that the longitudinal axis (19) of the camera (13) is aligned coaxially with respect to the workpiece holder (10).

6. Method according to any one of Claims 1 to 5, **characterized in that** the division of the blank (11) is calculated by means of a software algorithm on the basis of the contrast between the processed region (14) and the unprocessed region (15).

7. Method according to Claim 6, **characterized in that** a light source (18) for increasing the contrast is provided below the workpiece holder (10).

8. Method according to any one of Claims 1 to 7, **characterized in that** the assignment of the workpiece geometry (17) to be produced to the unprocessed region (15) of the blank (11) is implemented automatically by the control device (6).

9. Method according to any one of Claims 1 to 7, **characterized in that** the assignment of the workpiece geometry (17) to be produced to the unprocessed region (15) of the blank (11) is implemented automatically by the computer unit (24) by means of a CAM system.

10. Method according to any one of Claims 1 to 9, **characterized in that** the processing machine (1) comprises a workpiece interchanger (20).

11. Method according to Claim 10, **characterized in that** an unsuccessful assignment of the workpiece geometry (17) is followed by the processing machine (1) taking a further blank (11) stored in the workpiece interchanger (20).

12. Processing method for a blank,
a processing machine (1) for processing the blank comprising a housing (2) and a spindle unit (4) with an electric motor (23), the processing machine (1) being a dental milling machine,
control and electrical supply of the processing machine (1) being implemented by way of a control device (6), the processing machine comprising a workpiece holder (10) and a computer unit (24) for creating processing programs for the manufacture of workpieces,
comprising the following steps:
- creating an image of the blank (11) by means of an image capturing unit (12) that is formed separately from the processing machine, the image capturing unit (12) serving for optical capture of image data of a blank (11),
- dividing the blank (11) into an already processed region (14) and into an unprocessed region (15) on the basis of the captured image data,
- assigning a workpiece geometry (17) to be produced to the unprocessed region (15) of the blank (11),
- inserting the blank (11) into the processing machine (1), in particular into the workpiece holder (10) of the processing machine (11), and
- carrying out the milling processing in the unprocessed region of the blank.

13. Method according to Claim 12, **characterized in that** the blank (11) is aligned using a marking provided on the blank when the blank (11) is inserted into the workpiece holder (10).

14. Method according to Claim 12 or 13, **characterized in that** the image capturing unit (12) is a portable computer unit with a camera, in particular a cellular telephone, preferably a tablet computer.

15. Method according to Claim 12, **characterized in that** the image data captured by the image capturing unit (12) are transferred to the computer unit (24) of the processing machine (1) via a data link (30).

## Revendications

1. Procédé permettant d'agencer de manière automatisée une ébauche dans une machine d'usinage, la machine d'usinage (1) étant une fraiseuse dentaire,
dans lequel la machine d'usinage (1) comprend un boîtier (2) et une unité de broche (4) pourvue d'un moteur électrique (23),
dans lequel la commande et l'alimentation électrique de la machine d'usinage (1) sont effectuées par dispositif de commande (6), comprenant une unité informatique (24) pour créer des programmes d'usinage pour la fabrication de pièces, un porte-pièce (10) et une unité d'acquisition d'image (12) pour l'acquisition optique de données d'image d'une ébauche (11) reçue dans le porte-pièce (10),
comprenant les étapes suivantes consistant à :
- fixer une ébauche (11) dans la machine d'usinage (1), en particulier dans le porte-pièce (10),
- créer une image de l'ébauche (11) au moyen de l'unité d'acquisition d'image (12),
- diviser l'ébauche (11) en une zone déjà usinée (14) et en une zone non usinée (15) à l'aide des données d'image acquises,
- attribuer une géométrie de pièce (17) à fabriquer à la zone non usinée (15) de l'ébauche (11), et
- effectuer le fraisage.

2. Procédé selon la revendication 1, **caractérisé en ce que** le dispositif d'acquisition d'image (12) est disposé dans le boîtier (2) de la machine d'usinage (1).

3. Procédé selon la revendication 1 ou 2, **caractérisé en ce que** le dispositif d'acquisition d'image (12) comprend au moins une caméra (13).

4. Procédé selon la revendication 3, **caractérisé en ce que** la caméra (13) est disposée au-dessus du porte-pièce (10).

5. Procédé selon la revendication 3 ou 4, **caractérisé en ce que** la caméra (13) présente un axe longitudinal (19) et **en ce que** la caméra (13) est alignée de telle sorte que l'axe longitudinal (19) de la caméra (13) est aligné coaxialement par rapport au porte-pièce (10).

6. Procédé selon l'une quelconque des revendications 1 à 5, **caractérisé en ce que** la division de l'ébauche (11) est calculée au moyen d'un algorithme logiciel sur la base du contraste entre la zone usinée (14) et la zone non usinée (15).

7. Procédé selon la revendication 6, **caractérisé en ce qu'**une source de lumière (18) est prévue au-dessous du porte-pièce (10) pour augmenter le contraste.

8. Procédé selon l'une quelconque des revendications 1 à 7, **caractérisé en ce que** l'attribution de la géométrie de pièce à fabriquer (17) à la zone non usinée (15) de l'ébauche (11) est effectuée de manière automatisée par le dispositif de commande (6).

9. Procédé selon l'une quelconque des revendications 1 à 7, **caractérisé en ce que** l'attribution de la géométrie de pièce à fabriquer (17) à la zone non usinée (15) de l'ébauche (11) est effectuée de manière automatisée par l'unité informatique (24) au moyen d'une système de FAO.

10. Procédé selon l'une quelconque des revendications 1 à 9, **caractérisé en ce que** la machine d'usinage (1) comprend un changeur de pièce (20).

11. Procédé selon la revendication 10, **caractérisé en ce qu'**après un échec d'attribution de la géométrie de pièce (17), la machine d'usinage (1) fait appel à une autre ébauche (11) disponible dans le changeur de pièce (20).

12. Procédé permettant d'usiner une ébauche, dans lequel une machine d'usinage (1) pour l'usinage de l'ébauche comprend un boîtier (2) et une unité de broche (4) pourvue d'un moteur électrique (23), la machine d'usinage (1) étant une fraiseuse dentaire, dans lequel la commande et l'alimentation électrique de la machine d'usinage (1) sont effectuées par un dispositif de commande (6), la machine d'usinage comprenant un porte pièce (10) et une unité informatique (24) pour créer des programmes d'usinage pour fabriquer des pièces,
comprenant les étapes suivantes consistant à :
- créer une image de l'ébauche (11) au moyen d'une unité d'acquisition d'image (12) réalisée séparément de la machine d'usinage, l'unité d'acquisition d'image (12) servant à l'acquisition optique de données d'image d'une ébauche (11),
- diviser l'ébauche (11) en une zone déjà usinée (14) et en une zone non usinée (15) à l'aide des données d'image acquises,
- attribuer une géométrie de pièce (17) à fabriquer à la zone non usinée (15) de l'ébauche (11),
- placer l'ébauche (11) dans la machine d'usinage (1), en particulier dans le porte-pièce (10) de la machine d'usinage (1), et
- effectuer le fraisage dans la zone non usinée de l'ébauche.

13. Procédé selon la revendication 12, **caractérisé en ce que** lors de l'insertion dans le porte-pièce (10) l'ébauche (11) est alignée sur un repère prévu sur l'ébauche.

14. Procédé selon la revendication 12 ou 13, **caractérisé en ce que** l'unité d'acquisition d'image (12) est une unité informatique portable pourvue d'une caméra, en particulier un téléphone mobile, de préférence une tablette.

15. Procédé selon la revendication 12, **caractérisé en ce que** les données d'image acquises par l'unité d'acquisition d'image (12) sont transmises par une liaison de données (30) à l'unité informatique (24) de la machine d'usinage (1).
